Europäisches Patentamt

(19) European Patent Office

Office européen des brevets

(11) Publication number: **0 203 501**
**B1**

(12) **EUROPEAN PATENT SPECIFICATION**

(45) Date of publication of patent specification: **11.04.90**

(51) Int. Cl.⁵: **F 28 D 20/00**

(21) Application number: **86106853.4**

(22) Date of filing: **20.05.86**

(54) Latent heat storage apparatus for cooling.

<table>
<tr><td>

(30) Priority: **20.05.85 JP 107688/85**

(43) Date of publication of application:
**03.12.86 Bulletin 86/49**

(45) Publication of the grant of the patent:
**11.04.90 Bulletin 90/15**

(84) Designated Contracting States:
**DE FR GB IT**

(56) References cited:
**EP-A-0 044 998**
**DE-A-3 132 793**
**GB-A-1 540 835**
**US-A-4 127 161**
**US-A-4 253 983**
**US-A-4 331 556**

**PATENT ABSTRACTS OF JAPAN, vol. 8, no. 207**
**(M-327)1644r, 21st September 1984; & JP - A -**
**59 95 386 (FUJIKURA DENSEN K.K.) 01-06-1984**

</td><td>

(73) Proprietor: **The Chubu Electric Power Company, Inc.**
**1, Toshincho Higashi-ku**
**Nagoya-shi Aichi 461 (JP)**

(73) Proprietor: **FUJIKURA LTD.**
**No. 5-1 Kiba 1-chome**
**Koto-ku Tokyo 135 (JP)**

(72) Inventor: **Takagi, Hirotaka**
**45, Yashirodai 2-chome Meito-ku**
**Nagoya-shi Aichi (JP)**
Inventor: **Hasegawa, Yutaka**
**13-6, Mitahorahigashi 3-chome**
**Gifu-shi Gifu (JP)**
Inventor: **Ito, Masahiko**
**c/o Fujikura Ltd., 5-1 Kiba 1-chome**
**Koto-ku Tokyo (JP)**
Inventor: **Motai, Tsuneaki**
**c/o Fujikura Ltd., 5-1 Kiba 1-chome**
**Koto-ku Tokyo (JP)**
Inventor: **Mochizuki, Masataka**
**c/o Fujikura Ltd., 5-1 Kiba 1-chome**
**Koto-ku Tokyo (JP)**

</td></tr>
</table>

Courier Press, Leamington Spa, England.

(56) References cited:
PATENT ABSTRACTS OF JAPAN, vol. 7, no. 112
(M-215)1257r, 17th May 1983; & JP-A- 58 33 097
(HITACHI SEISAKUSHO K.K.) 26-02-1983

PATENT ABSTRACTS OF JAPAN, vol. 8, no. 160
(M-312)1597r, 25th July 1984;& JP-A- 59 56 092
(MATSUSHITA DENKI SANGYO K.K.) 31-03-1984

N.G. GAYLORD: "High Polymers", part 1, 1963,
pages 122-124,169-177, Gaylord Associates,
Newark, New Jersey, US

(74) Representative: Bühling, Gerhard, Dipl.-Chem.
et al
Patentanwaltsbüro Tiedtke-Bühling-Kinne
Grupe-Pellmann-Grams-Struif Bavariaring 4
D-8000 München 2 (DE)

**Description**

This invention relates to a latent heat storage apparatus intended for cooling a fluid such as water and air, and more particularly, to a latent heat storage apparatus for storing heat in a heat storage medium in the form of a latent heat associated with its phase change.

Among prior art heat storage installations for cooling a refrigerant circulating past a heating element in order to cool the heating element was known one using water as a low temperature source. Water has many advantages including economy and ease of handling, but has a low cooling capacity per unit volume because it absorbs heat in the form of sensible heat when used in the range of room temperature. A large volume of water is thus required to provide a desired cooling capacity so that the overall size of apparatus required becomes large enough to increase the cost of installation along with the cost required for installation space.

In order to solve these problems, there was proposed a heat storage apparatus intended for cooling a fluid utilizing latent heat associated with phase change of a material including condensation and melting. When such latent heat storage apparatus using a heat storage medium which undergoes phase changes is applied, it is preferred to divide the heat storage medium into sections of appropriate dimensions in order to provide ease of handling and transportation and allow for location in a limited space.

When a refrigerant is circulated between a heating element and a cooling apparatus at a constant flow rate, the temperature of the refrigerant entering the cooling apparatus is always substantially constant provided that substantially a fixed amount of heat is supplied from the heating element. In order to carry out stable cooling of the heating element, the temperature of the refrigerant coming to the heating element, that is, the temperature of the refrigerant at the outlet of the cooling apparatus should be kept substantially constant. A heat storage apparatus intended for cooling a fluid and having a segmented structure may be assembled by incorporating in such a circulation cooling system a plurality of cooling cells each having latent heat storage medium charged therein. In cooling the refrigerant with this apparatus, the temperature of the refrigerant is gradually lowered from the inlet to the outlet side with the same temperature of phase change for all the heat storage media. Then those cooling cells near the outlet experience a little temperature difference between the heat storage medium and the refrigerant and are thus poor in cooling efficiency per unit time, that is, thermal response. This is because quantity of heat transfer is in proportion to temperature difference, time, and heat transfer area. In a system having a plurality of cooling cells of the same construction, there is the likelihood that the heat storage media of cooling cells near the outlet has not undergone phase change even after the heat storage media of cooling cells near the inlet has undergone phase change. Since phase change is completed in sequence from the heat storage medium in the cooling cell nearest the inlet, the temperature of refrigerant at the outlet is progressively raised and the utilization of cooling heat stored as latent heat becomes inefficient. Such inconvenience may be overcome by changing the structure of cooling cells in sequence of location to increase the heat receiving area of the downstream cooling cells with the refrigerant to compensate for the lack of heat transfer quantity due to a reduced temperature difference, or by changing the amount of heat storage medium charged in cooling cells in sequence of location. Such modifications need to prepare many different types of cooling cells so that not only the apparatus becomes complicated with a reduced degree of freedom of design, but also the overall apparatus becomes large-sized and expensive.

EP—A—00 44 998 describes a latent heat storage apparatus intended for cooling a fluid which apparatus comprises a cooling tank through which the fluid flows in a given direction from an inlet to an outlet, said inlet and said outlet being arranged at opposed ends of said cooling tank. In the flow path of the fluid a series of cooling cells separated from each other and filled with heat storage media having different melting points is disposed. The cooling cells are disposed stepwise according to the melting points of their heat storage media along the flow path of the fluid. As heat storage media only special salts and their mixtures, i.e. NaF, 75% NaF/25% $MgF_2$, and 67% LiF/33% $MgF_2$, are used, the different melting points being adjusted by means of a special mixing ratio. As can be seen in the table on page 4 of EP—A—00 44 998, the mixtures in the zones A to C have strongly deviating melting heats. The temperature differences between the melting points of the zones A and B and B and C are also very large. By using the latent heat storage apparatus according to EP—A—00 44 998, a fluid can be effectively cooled, but it is not possible to vary the cooling effect in accordance with the inlet and/or outlet temperature of the fluid.

It is known e.g. from "High Polymers", Vol. XIII, Polyethers, Part I, pages 122—123 (Interscience Publishers 1963), that the melting point of polyethylene oxides is a function of their average molecular weight.

It is the object of the invention to provide a latent heat storage apparatus intended for cooling a fluid according to the preamble of the claim which apparatus makes possible not only to achieve an equal constant cooling effect at all cooling cells but also to selectively vary its cooling efficiency so that the apparatus can be used for different fluids and for different cooling processes.

This object is achieved by a latent heat storage apparatus having the features indicated in the characterizing portion of the claim.

The preferred embodiments of the invention are described as follows in conjunction with the accompanying drawings, in which:

Fig. 1A is a schematic plan view of a latent heat storage apparatus according to one embodiment of the present invention;

Fig. 1B is a diagram illustrating temperature changes of fluid passing through the cooling tank of the apparatus of Fig. 1A; and

Fig. 2 is an elevational cross-section of one exemplary cooling cell.

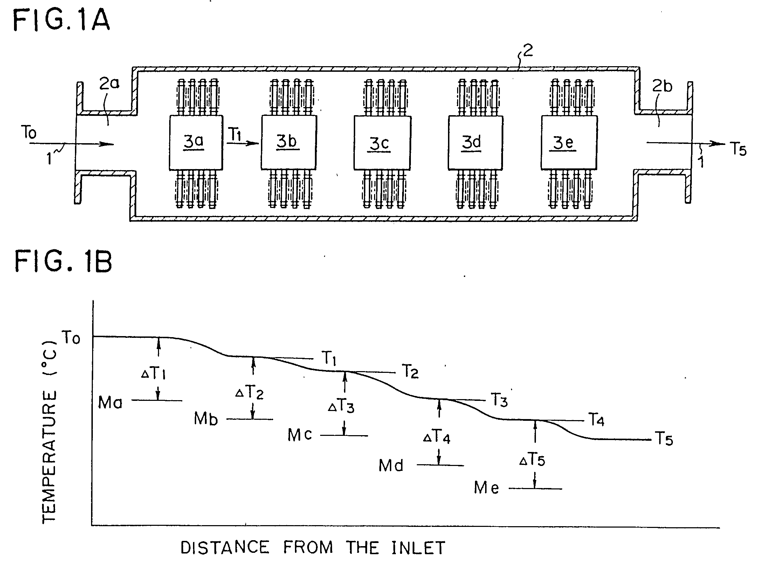

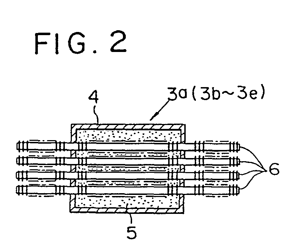

Referring to Fig. 1A, there is illustrated a latent heat storage apparatus according to one preferred embodiment of the present invention. The apparatus comprises an elongated cooling tank 2 through which a fluid 1 to be cooled is passed in a given direction, that is, from its inlet 2a to its outlet 2b as shown by arrows. The fluid may be a refrigerant which has received heat from any heating element. A series of (five in the illustrated embodiment) cooling cells 3a, 3b, 3c, 3d, and 3e are disposed in the cooling tank in the flow direction of the fluid such that heat transfer may take place between the fluid 1 and the cooling cells 3a—3e. All the cooling cells 3a—3e are of the same structure and dimensions. In one preferred embodiment as shown in Fig. 2, each cooling cell includes a container 4 filled with a latent heat storage medium 5, i.e. with polyethylene glycol (PEG). A plurality of heat pipes 6 extend into the container 4 in contact with the heat storage medium 5. In the illustrated embodiment, four heat pipes 6 are horizontally (as viewed in Fig. 2) extended throughout the container 4 with their opposite end portions protruded out of the container. The heat pipe end portions are thus exposed to the fluid 1 in the cooling tank 2 so that heat exchange may take place between the fluid 1 and the heat storage medium 5 through the heat pipes 6.

All the heat storage media 5 in the cooling cells 3a—3e have different phase change temperatures, i.e. different melting points. The cooling cells are disposed in such an order that the melting point Ma of heat storage medium in the most upstream cooling cell in the fluid flow direction, that is, cooling cell 3a disposed near the inlet 2a of the cooling tank 2 is the highest and the melting point of heat storage medium is then lowered by degrees toward the cooling cell disposed near the outlet 2b. The heat storage media in cooling cells 3a, 3b, 3c, 3d, and 3e have melting points Ma, Mb, Mc, Md, and Me, respectively, with $Ma > Mb > Mc > Md > Me$. This stepwise lowering of melting point may be achieved by varying the average molecular weight of PEG.

The melting point (mp) of polyethylene glycols (PEG) is correlated to their average molecular weight (MW) as shown in Table 1. A PEG having a proper average molecular weight may be chosen for a particular cooling cell depending on a melting point difference $\Delta M$ to be set between the cooling cells 3a—3e.

TABLE 1

| MW | 480 | 470 | 460 | 450 | 440 | 430 | 420 | 410 | 400 | 390 |
|---|---|---|---|---|---|---|---|---|---|---|
| mp, °C | 15 | 14 | 13 | 12 | 11 | 10 | 9 | 8 | 7 | 6 |

The heat pipes 6 are designed such that when the temperature of the heat storage medium 5 is at its melting point, heat of the fluid 1 is transferred to the heat storage medium 5 to lower the temperature of the fluid.

The operation of the above-arranged apparatus will be described. The diagram of Fig. 1B shows how the temperature of the fluid 1 passing through the cooling tank 2 changes when the fluid 1 is cooled with the latent heat stored in the heat storage medium 5. The fluid 1 is passed through the cooling tank 2 at a temperature T0 and a flow rate both predetermined from a design choice, with the heat storage media 5 in the cooling cells 3a—3e being at the temperatures corresponding to their melting points Ma—Me, respectively. Since the temperature of heat storage medium 5 in the first cooling cell 3a is at its melting point Ma, the fluid 1 is cooled on the basis of the temperature difference $\Delta T1$ (=T0—Ma) between the fluid and the heat storage medium. The temperature of fluid is lowered to T1 in the region of the cooling tank 2 where the first cooling cell 3a is located. The fluid 1 having its temperature decreased to T1 is further deprived of heat by means of the second cooling cell 3b. Since the melting point Mb of heat storage medium in the second cooling cell 3b is set lower than the melting point Ma of heat storage medium in the first cooling cell 3a, irrespective of the somewhat decreased temperature of fluid 1, the temperature difference T2 between the temperature of the fluid 1 and the melting point Mb of heat storage medium in the second cooling cell 3b is not so small. Then the fluid 1 is cooled by means of the second cooling cell 3b to approximately the same extent as done by means of the first cooling cell 3a. The temperature of fluid is thus lowered to T2 in the region of the cooling tank 2 where the second cooling cell 3b is located. This means that the thermal response of the second cooling cell 3b is maintained substantially equal to that of the first cooling cell 3a.

The fluid 1 is further cooled during passage of the third and succeeding cooling cells 3c—3e. Since the melting points Mc—Me of heat storage media in the third and succeeding cooling cells 3c—3e are set to become lower by degrees in the order of cooling cell disposition, irrespective of progressive cooling of the fluid, the temperature differences $\Delta T3$—$\Delta T5$ between the temperature of the fluid 1 and the melting points Mc—Me of heat storage media in the cooling cells 3c—3e are not so small. The fluid 1 is thus cooled to a similar extent across the successive cooling cells. The temperature of the fluid 1 is eventually lowered to T5. In the apparatus of the invention, the temperatures of heat storage media in the cooling cells 3a—3e are maintained at their melting points Ma—Me, respectively until the heat storage media have completely melted. The temperature differences between the respective cooling cells 3a—3e and the corresponding

fluid are ΔT1—ΔT5, respectively. The cooling efficiency in the cooling cells 3a—3e is not significantly lowered insofar as the flow rate of fluid 1 is kept constant. It is then possible to fast cool the fluid 1 and maintain the temperature of the fluid leaving the outlet 2b at T5. Since melting of heat storage media proceeds substantially at the same time in all the cooling cells 3a—3e, the latent heat stored in the heat storage media can be effectively taken out. Changes in the temperature and/or flow rate of the fluid 1 entering the cooling tank 2 do not affect the effective take-out of the latent heat stored in the heat storage media because melting of the heat storage media proceeds substantially simultaneously in all the cooling cells.

The temperature reduction in each cooling cell may be controlled by a proper choice of the quantity of heat transfer between fluid and heat storage medium which in turn, depends on a particular type of heat storage medium and heat pipe. If each cooling cell can accomplish only a small temperature reduction, the fluid may be finally cooled to the desired low temperature by increasing the number of cooling cells. The apparatus in which heat storage media have melted may be regenerated by passing a fluid at a temperature lower than the freezing point of the heat storage media in the reverse direction to cause the heat storage media to be frozen again through a reverse process to the above-mentioned process. Also effective freezing of heat storage media can be accomplished in the regeneration procedure.

The apparatus of the present invention is provided with an additional inlet or outlet port (not shown in Fig. 1A) between the serially disposed cooling cells so that fluid may be passed across any desired number of cooling cells. Thus an incoming fluid having a wide range of temperature may be fed or the outgoing fluid may have a wide range of temperature. The heat storage medium-containing cooling cell used in the present apparatus may be of vertical type wherein heat pipes are vertically (as viewed in Fig. 2) extended through the cooling cell.

Since the temperature difference between a fluid to be cooled and a heat storage medium serving as a heat sink is not significantly reduced with the progress of fluid cooling, the apparatus of the present invention as illustrated above provides an improved cooling efficiency per unit time or thermal response and is thus successful in fast cooling the fluid. Since the heat storage media in the cooling cells concurrently melt to substantially the same extent while receiving heat from the fluid, the cooling efficiency is not significantly lowered with the lapse of time and the latent heat stored in the heat storage media is effectively utilized substantially 100%. Thus, it is not necessary to contain an extra amount of heat storage medium, which also contributes to size reduction.

**Claim**

A latent heat storage apparatus intended for cooling a fluid (1), comprising

a cooling tank (2) through which the fluid (1) flows in a given direction from an inlet (2a) to an outlet (2b), said inlet (2a) and said outlet (2b) being arranged at opposed ends of said cooling tank (2), and

a series of cooling cells (3a, 3b, 3c, 3d, 3e) disposed in said cooling tank (2), each containing a heat storage medium for storing heat in the form of latent heat associated with its phase change and capable of heat exchange with said fluid (1), said cooling cells (3a, 3b, 3c, 3d, 3e) being disposed in such an order that the phase change temperature (Ma, Mb, Mc, Md, Me) of the heat storage medium is lowered by degrees in the flow direction of said fluid (1),

characterized in that said heat storage medium comprises polyethylene glycol (PEG) the average molecular weight of which is reduced in sequence from the cooling cell (3a) on the inlet side to the cooling cell (3e) on the outlet side so that at each cooling cell (3a, 3b, 3c, 3d, 3e) the temperature difference ($\Delta T_i$) between the temperature ($T_i$) of said fluid (1) and said phase change temperature (Ma, Mb, Mc, Md, Me) of said heat storage medium is approximately constant for providing a constant cooling effect, and

in that there is provided an additional inlet or outlet port between the serially disposed cooling cells (3a, 3b, 3c, 3d, 3e) for passing the fluid (1) across any desired number of cooling cells.

**Patentanspruch**

Vorrichtung zur Speicherung von latenter Wärme, die zum Kühlen eines Fluids (1) bestimmt ist, mit

einem Kühlgefäß (2), durch das das Fluid (1) in einer gegebenen Richtung von einem Einlaß (2a) zu einem Auslaß (2b) hindurchströmt, wobei der Einlaß (2a) und der Auslaß (2b) an entgegengesetzten Enden des Kühlgefäßes (2) angeordnet sind, und

einer Reihe von Kühlzellen (3a, 3b, 3c, 3d, 3e), die in dem Kühlgefäß (2) angeordnet sind, wobei jede Kühlzelle ein Wärmespeichermittel zur Speicherung von Wärme in Form von latenter Wärme, die mit seiner Phasenänderung verbunden ist, enthält und zum Wärmeaustausch mit dem Fluid (1) befähigt ist, wobei die Kühlzellen (3a, 3b, 3c, 3d, 3e) in einer derartigen Reihenfolge angeordnet sind, daß die Phasenänderungstemperatur (Ma, Mb, Mc, Md, Me) des Wärmespeichermittels in der Strömungsrichtung des Fluids (1) stufenweise herabgesetzt wird,

dadurch gekennzeichnet, daß das Wärmespeichermittel aus Polyethylenglykol (PEG) besteht, dessen Durchschnittsmolekulargewicht der Reihe nach von der Kühlzelle (3a) an der Einlaßseite zu der Kühlzelle (3e) an der Auslaßseite abnimmt, so daß bei jeder Kühlzelle (3a, 3b, 3c, 3d, 3e) die Temperaturdifferenz

## EP 0 203 501 B1

($\Delta T_i$) zwischen der Temperatur ($T_i$) des Fluids (1) under Phasenänderungstemperatur (Ma, Mb, Mc, Md, Me) des Wärmespeichermittels annähernd konstant ist, damit eine konstante Kühlwirkung erzielt wird, und

daß zwischen den in Reihe bzw. hintereinander angeordneten Kühlzellen (3a, 3b, 3c, 3d, 3e) eine zusätzliche Einlaß- oder Auslaßöffnung vorgesehen ist, um das Fluid (1) durch irgendeine gewünschte Zahl von Kühlzellen hindurchströmen zu lassen.

**Revendication**

Appareil de stockage de chaleur latente destiné à refroidir un fluide (1), comprenant:

une cuve de refroidissement (1) à travers laquelle le fluide (1) circule dans une direction donnée depuis une entrée (2a) jusqu'à une sortie (2b), cette entrée (2a) et cette sortie (2b) étant disposées à des extrémités opposées de cette cuve de refroidissement (2), et

une série de cellules de refroidissement (3a, 3b, 3c, 3d, 3e) disposées dans cette cuve de refroidissement (2), chacune contenant un milieu de stockage de chaleur pour stocker de la chaleur sous la forme de chaleur latente associée à son changement de phase et susceptible d'échange thermique avec ce fluide (1), les cellules de refroidissement (3a, 3b, 3c, 3d, 3e) étant disposées dans un ordre tel que la température (Ma, Mb, Mc, Md, Me) du changement de phase du milieu de stockage de chaleur diminue par degrés dans la direction de circulation du fluide (1),

caractérisé en ce que le milieu de stockage de chaleur comprend du polyéthylène glycol dont le poids moléculaire diminue successivement depuis la cellule de refroidissement (3a) située du côté arrivée jusqu'à la cellule de refroidissement (3e) située du côté sortie de telle sorte que, dans chaque cellule de refroidissement (3a, 3b, 3c, 3d, 3e) la différence de température (Ti) entre la température (Ti) du fluide (1) et la température (Ma, Mb, Mc, Md, Me) du changement de phase du milieu de stockage de chaleur est sensiblement constante afin de procurer un effet de refroidisseemnt constant, et

en ce qu'il est prévu un orifice additionnel d'entrée ou de sortie entre les cellules de refroidissement disposées en série (3a, 3b, 3c, 3d, 3e) poru faire passer le fluide (1) à travers tout nombre désiré de cellules de refroidissement.

# FIG.1A

# FIG.1B

DISTANCE FROM THE INLET

EP 0 203 501 B1

# FIG. 2